Europäisches Patentamt

European Patent Office

Office européen des brevets

(19)

(11) Numéro de publication : **0 088 696**
**B1**

(12) **FASCICULE DE BREVET EUROPÉEN**

(45) Date de publication du fascicule du brevet :
12.11.86

(51) Int. Cl.⁴ : **B 64 C   1/26**, B 64 C 39/08

(21) Numéro de dépôt : 83400469.9

(22) Date de dépôt : 07.03.83

(54) **Aéronef pourvu d'une structure de sustentation à ailes superposées multiples.**

(30) Priorité : 09.03.82 FR 8203961

(43) Date de publication de la demande :
14.09.83 Bulletin 83/37

(45) Mention de la délivrance du brevet :
12.11.86 Bulletin 86/46

(84) Etats contractants désignés :
AT BE CH DE GB IT LI LU NL SE

(56) Documents cités :
FR-A-   736 876
FR-A- 1 397 402
GB-A- 2 062 565
US-A- 4 053 125
US-A- 4 146 199

(73) Titulaire : **Cabrol, Lucien**
**12 rue des Carmes**
**F-13000 Arles (FR)**

(72) Inventeur : **Cabrol, Lucien**
**12 rue des Carmes**
**F-13000 Arles (FR)**

(74) Mandataire : **Bonnetat, Christian et al**
**Cabinet PROPI Conseils 23 rue de Léningrad**
**F-75008 Paris (FR)**

## Description

La présente invention concerne un aéronef du type comportant, de part et d'autre de son fuselage, au moins une structure de sustentation constituée d'au moins deux ailes dont les extrémités distales sont reliées, soit entre elles, soit à au moins un élément de voilure prévu entre elles, chaque structure formant, en vue de face, avec les côtés du fuselage, un polygone fermé, et comportant une aile supérieure et une aile inférieure, les zones d'attache des ailes supérieure et inférieure étant éventuellement décalées suivant la direction de l'écoulement aérodynamique.

On sait qu'une aile d'aéronef doit présenter un profil et des caractéristiques déterminées en fonction d'impératifs contradictoires. En effet, il est nécessaire, entre autres obligations, de retarder le phénomène de décrochement laminaire, de diminuer, voire de supprimer les fuites marginales, et enfin de diminuer les perturbations de l'écoulement au raccordement de l'aile d'une part au fuselage et d'autre part aux parties mobiles. Or, pour un profil d'aile répondant à la première condition susvisée, l'allongement de l'aile permet de résoudre les difficultés liées aux deux conditions énoncées. Néanmoins cet allongement ne peut être que limité eu égard à l'encombrement de l'aéronef. Une solution réside dans le repli de l'aile sur elle-même, et donc dans la réalisation de structures à ailes multiples superposées.

On connaît déjà, par le document US-A-4 146 199, un aéronef du type rappelé ci-dessus.

Dans cet aéronef connu, les ailes sont encastrées dans le fuselage et sont reliées entre elles de manière rigide. Or, une telle structure rigide, qui peut être soumise à des efforts aérodynamiques importants, n'est pas en vérité très résistante du fait même de sa rigidité.

La présente invention a pour objet de remédier à cet inconvénient.

A cette fin, selon l'invention, l'aéronef du type mentionné ci-dessus, est caractérisé en ce que la fixation des ailes entre elles, au fuselage et, éventuellement, audit élément de voilure est réalisé de manière articulée en rotation dans un plan vertical transversal à la direction de l'écoulement aérodynamique.

Ainsi, grâce à la fixation des ailes conformément à l'invention, on obtient une structure de sustentation flexible, qui est plus résistante qu'une structure rigide. En effet, sa flexibilité propre permet à la structure de sustentation de l'invention de se déformer sans dommage sous l'action de contraintes aérodynamiques. La structure de sustentation de l'invention se comporte en fait, plus ou moins, comme les ailes d'un oiseau qui plane. En outre, une telle possibilité de déformation de la structure de sustentation permet, en quelque sorte, d'accumuler en cours de vol, de l'énergie récupérable par la suite, du fait notamment, que l'on obtient, grâce aux possibilités de déformations des ailes, une sorte de « battement » de celles-ci en cours de vol.

Ainsi, un aéronef selon l'invention, présente des qualités de résistance, notamment à la torsion, importantes ; il possède en outre les caractéristiques nécessaires à la réalisation d'un écoulement aérodynamique dans les meilleures conditions de sustentation.

Avantageusement, on fait en sorte que les valeurs maximales du moment d'inertie et de la portance correspondent chacune à une zone de l'aile située sensiblement au centre de l'aile considérée dans le sens longitudinal. Par « moment d'inertie », on entend de façon usuelle, le moment pouvant s'opposer au moment de flexion dû à la force exercée sur l'aile et tendant à cintrer cette dernière. On obtient ainsi une répartition homogène de la portance et de la résistance aux efforts auxquels est soumise l'aile.

Le diagramme de variation de la portance et du moment d'inertie en fonction de la distance longitudinale, peut être quelconque et déterminé en fonction des besoins, sous réserve qu'il présente une valeur maximale au voisinage du centre de l'aile.

De préférence, chaque structure de sustentation comporte des moyens de haubanage. Ainsi, du fait de la présence des moyens de haubanage, la résistance de la structure à l'emplanture des ailes, peut être réduite, et il peut donc en être de même de l'épaisseur des ailes à cet endroit.

Ceci joint au fait que les ailes sont réalisées de manière que le moment d'inertie soit maximal au voisinage du centre de l'aile, permet d'assurer une rigidité d'ensemble optimale pour une épaisseur minimale de chaque aile. La variation de la portance peut ainsi être modulée, n'étant pas liée à un maximum à l'emplanture. Les efforts aérodynamiques maximaux de portance sont donc exercés en un endroit où justement l'aile est la plus résistante. En outre, grâce aux moyens de haubanage qui reprennent les efforts de torsion et de flexion, on peut utiliser des ailes de grands allongements, augmentant d'autant les qualités de sustentation de l'aéronef.

Les moyens de haubanage peuvent être constitués de câbles métalliques.

Ces moyens de haubanage peuvent également être constitués d'éléments de voilure, jouant le rôle de plans porteurs. Cette dernière disposition permet d'augmenter les qualités de vol de l'aéronef. Il est alors avantageux que les éléments de voilure formant haubans présentent une structure telle que les valeurs du moment d'inertie et de la portance variant en fonction de la distance longitudinale soient maximales en un endroit de l'élément de voilure correspondant à son milieu dans le sens longitudinal.

De préférence, dans chaque structure, l'une au moins des ailes ou l'un au moins des haubans, est solidarisé sur le fuselage par l'intermédiaire de moyens de suspension élastique, autorisant un mouvement relatif limité de l'aile ou du hauban correspondant par rapport au fuselage.

L'invention sera bien comprise à la lumière des dessins annexés.

Les figures 1, 2 et 3 montrent un exemple de réalisation de l'aéronef selon l'invention respectivement de côté, en plan et en vue frontale.

Les figures 4, 5 et 6 sont des vues schématiques d'une variante de réalisation de l'aéronef selon l'invention respectivement de côté, en vue frontale et en plan.

La figure 7 est un schéma en vue frontale d'un exemple de réalisation de l'aéronef montrant le diagramme de variation du moment d'inertie en fonction de la distance longitudinale.

La figure 8 montre en vue frontale partielle, une variante de réalisation des points d'attache des haubans sur les ailes d'une structure de sustentation.

Les figures 9, 10 et 11 sont des vues schématiques respectivement de côté, en plan et frontale d'une seconde variante. Les figures 12 et 13 montrent de côté et en plan un aéronef pourvu de structures doublées.

Les exemples de réalisation montrés sur les figures se rapportent plus particulièrement à des aéronefs sans moyens de propulsion autonomes, tels que des planeurs, et du type à plan dit canard (c'est-à-dire sans empennage mais comportant des volets ou ailes additionnels à l'avant). Bien entendu, l'invention n'est nullement limitée à ce genre d'aéronef, mais est susceptible de s'appliquer à tout aéronef, pourvu ou non de moyen de propulsion, avec ou sans empennage.

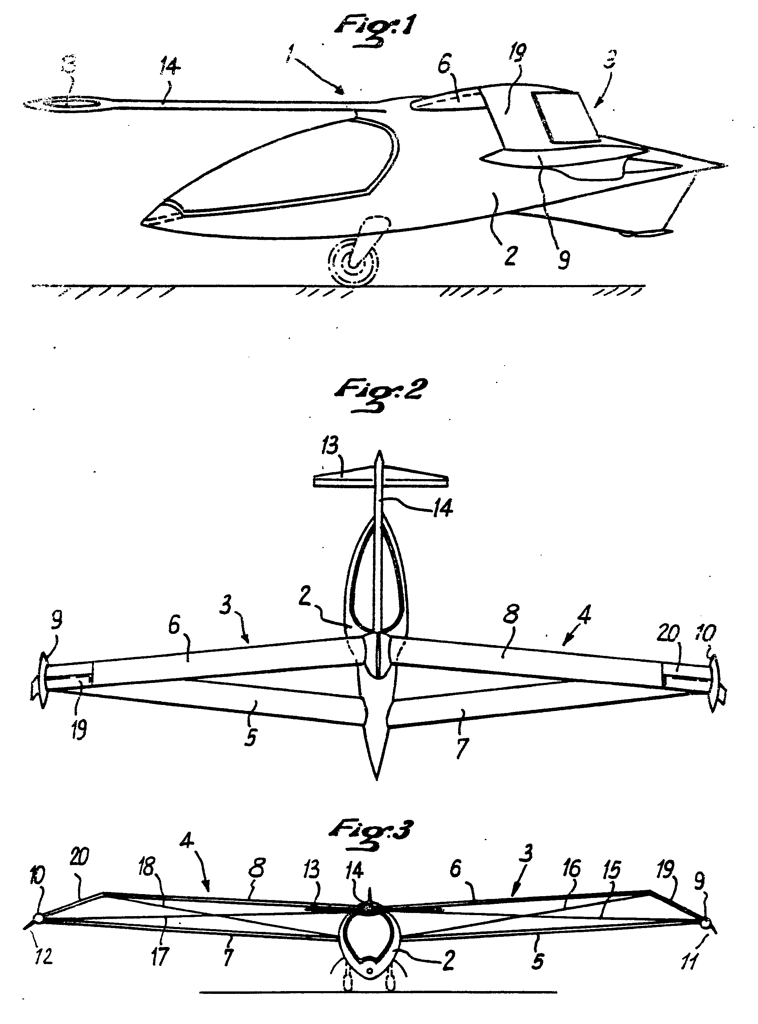

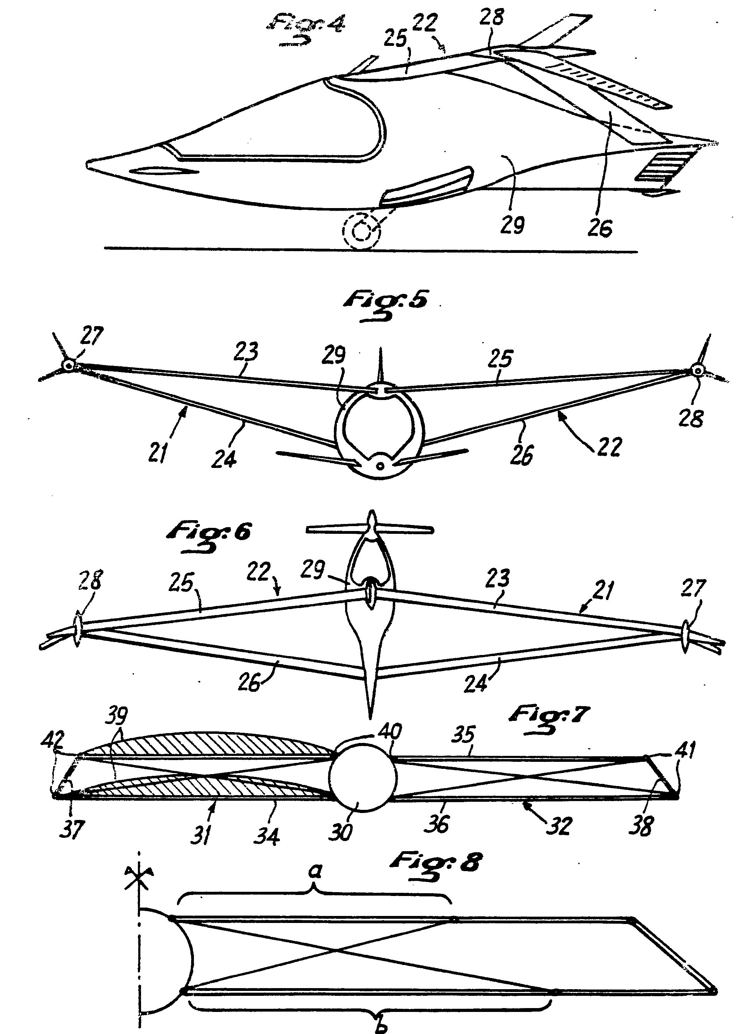

L'aéronef 1 montré sur les figures 1 à 3 comporte un fuselage 2 de part et d'autre duquel est disposée une structure de sustentation 3, 4. Les structures 3 et 4 sont identiques et constituées chacune de deux ailes portantes respectivement 5, 6 et 7, 8. Les extrémités distales de chaque couple d'ailes 5, 6 et 7, 8 sont reliées deux à deux par des corps fuselés respectifs 9, 10 pourvus d'ailerons additionnels 11, 12. L'aéronef 1, étant du type à plan canard, comporte un volet stabilisateur avant 13, disposé dans l'exemple des figures 1 à 3 à l'extrémité d'un mât 14.

Chaque structure de sustentation 3, 4 comporte une aile inférieure (5 et 7) et une aile supérieure (6 et 8). Ces dernières (6 et 8) sont reliées au fuselage 2, en avant, suivant le sens de l'écoulement aérodynamique, par rapport aux ailes inférieures 5 et 7, dans l'exemple des figures.

L'aéronef comporte des moyens de haubanage constitués de câbles métalliques 15, 16 pour la structure 3 et 17, 18 pour la structure 4. Chacun desdits câbles est relié au fuselage 2 et à l'extrémité distale de chaque aile. Les moyens de haubanage permettent de reprendre les efforts de flexion et de torsion imposés aux ailes de chaque structure.

Selon l'exemple des figures 1 à 3, les ailes supérieures 6 et 8 sont recourbées à leurs extrémités distales selon un panneau oblique latéral 19, 20 relié aux corps fuselés respectifs 9 et 10.

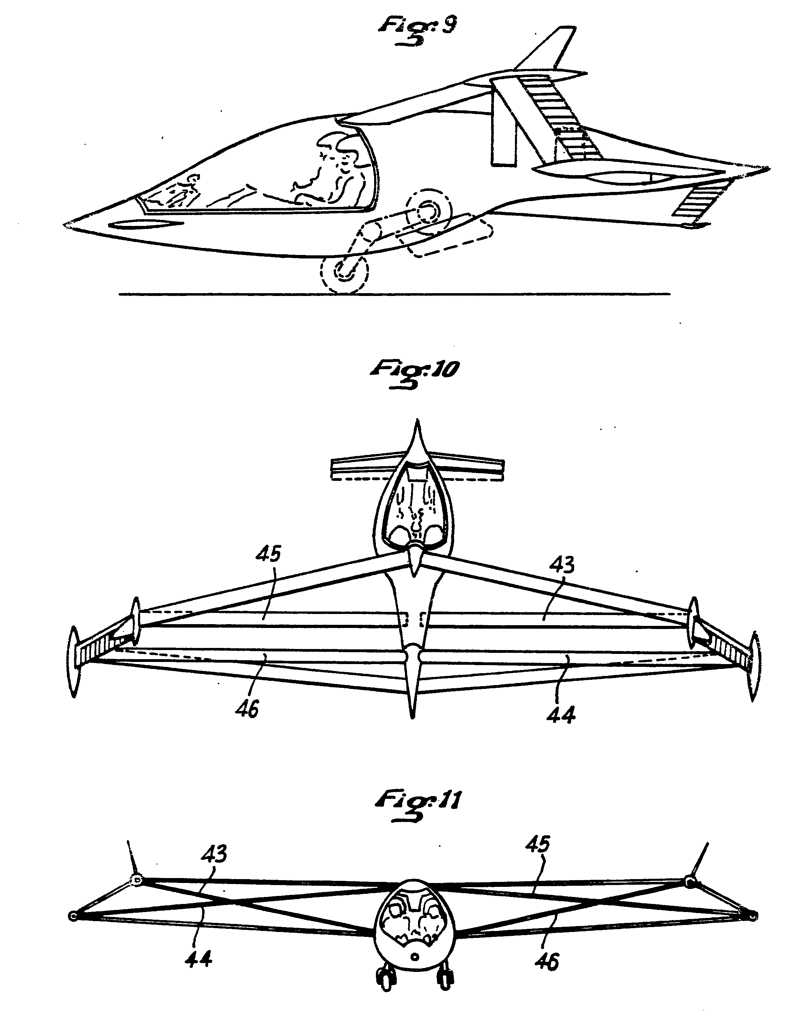

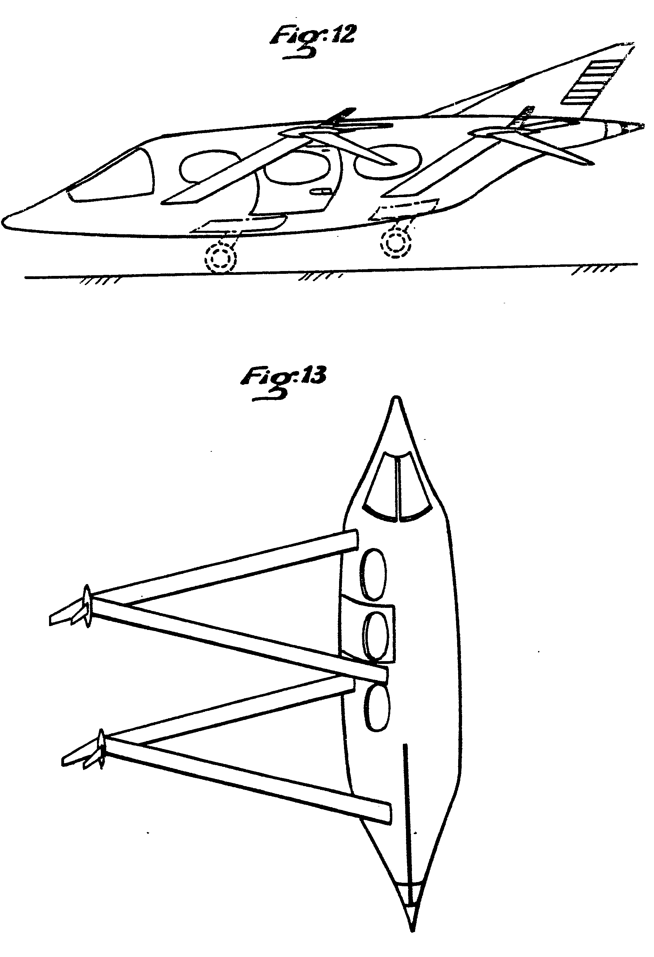

Les figures 4, 5 et 6 montrent une variante de réalisation dans laquelle chaque structure de sustentation 21 (et 22) est constituée d'une aile inférieure 24 (26) et d'une aile supérieure 23 (25), reliées à leur extrémité distale par un corps fuselé 27 (et 28), formant ainsi, avec le côté du fuselage 29, en vue frontale un triangle (voir la figure 5). Par comparaison, l'exemple de la figure 3 montre des structures de sustentation en forme de trapèze.

Selon la figure 7, est montré schématiquement en vue frontale un aéronef pourvu d'un fuselage 30 et de deux structures 31 et 32 composées chacune de deux ailes 33, 34 et 35, 36 reliées deux à deux à leur extrémité distale par un panneau latéral 37, 38.

Chaque aile présente une structure étudiée et conçue de manière que son moment d'inertie, variant en fonction de la distance longitudinale, présente un maximum au centre de celle-ci. Les courbes 39 représentent de manière schématique et symbolique cette variation du moment d'inertie de chaque aile 33 et 34. De même, la variation (non représentée) de la valeur de la portance de chaque aile en fonction de la distance longitudinale présente un maximum sensiblement au centre de l'aile. On obtient ainsi une répartition adéquate, aussi bien pour la reprise des contraintes auxquelles est soumise l'aile, qu'en ce qui concerne les caractéristiques de sustentation.

Les câbles de haubanage reprenant les efforts de torsion et de flexion pour assurer la rigidité de chaque structure, il est donc possible de relier les ailes au fuselage de manière articulée, ainsi que les extrémités distales de ces dernières entre elles. Les articulations, symbolisées sur la figure 7 par les points 40, 41, 42 sont réalisées dans le plan vertical de la figure 7, c'est-à-dire transversal à la direction de l'écoulement aérodynamique. On aboutit ainsi à la réalisation d'une structure articulée. Les liaisons entre le fuselage et les ailes et des ailes entre elles, des réalisations des figures 1 à 6, peuvent bien entendu être constituées d'articulation de ce type.

Suivant l'exemple des figures 1, 2, 3 et 7, il est bien entendu nécessaire de prévoir des moyens de haubanage si les ailes sont montées articulées sur le fuselage et entre elles. Ces moyens ne sont pas nécessaires dans la réalisation des figures 4, 5 et 6 du fait que la structure articulée triangulaire obtenue est en équilibre, constituant une structure autoporteuse.

Les points d'attache des câbles de haubanage sur les ailes peuvent être disposés aux extrémités distales des ailes ou en un autre point de ces dernières, ainsi que montré sur la figure 8. Les distances a et b sont calculées en fonction des impératifs liés à la géométrie de la structure. Les câbles de haubanage peuvent être croisés ou disposés de tout autre manière.

Sur les figures 9, 10 et 11 est représentée une variante de réalisation dans laquelle les moyens de haubanage sont constitués d'éléments de voilure 43, 44 et 45, 46 formant des plans porteurs. De préférence, les haubans ainsi formés d'éléments de voilure ont un profil tel qu'ils présentent les mêmes caractéristiques que les ailes, à savoir des variations longitudinales du moment d'inertie et de la portance présentant une valeur maximale en leur centre.

Chaque hauban, câble ou élément de voilure est solidarisé symétriquement sur le fuselage de manière que les points d'attache de chaque hauban soient disposés par paire symétriquement par rapport à un plan médian longitudinal. Cette disposition assure une répartition adéquate des efforts de torsion et flexion repris par lesdits haubans.

Dans le cas où les structures sont rigides, c'est-à-dire lorsque les ailes ne présentent pas de degré de liberté par rapport au fuselage et/ou aux panneaux d'extrémité de voilure, ou lorsque leur rigidité propre est trop grande malgré l'articulation de leurs attaches, il peut être avantageux de prévoir des moyens de suspension élastique permettant un mouvement relatif limité de chaque aile ou de chaque hauban par rapport au fuselage.

Ces moyens de suspension élastique sont par exemple constitués d'un cylindre dans lequel est susceptible de se mouvoir un piston (solidaire d'une tige reliée soit à l'aile ou à l'hauban correspondant) à l'encontre d'un ressort, par exemple, déformable pour une force donnée. La chambre du cylindre peut être également reliée à un circuit de pression hydraulique ou mixte air-liquide.

Ainsi, chaque aile ou hauban, solidarisé au fuselage par l'intermédiaire des moyens de suspension élastique, est susceptible de se mouvoir de manière limitée, lorsque les forces dépassent une valeur fixée à l'avance et correspondant à la pression hydraulique et/ou la force de déformation du ressort. On obtient par là une déformation légère de la structure qui évite aux ailes et aux haubans de subir des contraintes trop fortes sans enlever notablement de rigidité à la structure de voilure.

Les ailes et les haubans de chaque structure étant généralement fixés sur une même droite transversale à l'avancement, il est avantageux de prévoir un double cylindre muni de deux chambres (un pour chaque fixation d'aile disposée de manière symétrique sur le fuselage), pourvue chacune d'un piston, d'une tige, d'un ressort et/ou reliée à un circuit de pression hydraulique.

Sur les figures ont été représentés des aéronefs dont la zone d'attache des ailes supérieures de chaque structure est disposée en avant de celle des ailes inférieures. Bien entendu, ces zones d'attache respectives peuvent également être situées, soit dans un même plan vertical transversal à l'avancement, soit en arrière l'une de l'autre (à l'inverse des figures).

Les figures 12 et 13 montrent respectivement de côté et en plan (partiellement) une variante de réalisation d'un aéronef pourvu de deux structures de chaque côté du fuselage, disposée en des zones d'attache décalées chacune dans le sens longitudinal. Cette configuration convient à des aéronefs de taille relativement plus grande, qui conserve ainsi les avantages apportés par l'invention.

## Revendications

1. Aéronef, du type comportant, de part et d'autre de son fuselage (2), au moins une structure de sustentation (3, 4) constituée d'au moins deux ailes (5, 6 ; 7, 8) dont les extrémités distales sont reliées soit entre elles, soit à au moins un élément de voilure (37, 38) prévu entre elles, chaque structure formant, en vue de face, avec les côtés du fuselage, un polygone fermé, et comportant une aile supérieure et une aile inférieure, les zones d'attache des ailes supérieure et inférieure étant éventuellement décalées suivant la direction de l'écoulement aérodynamique, caractérisé en ce que la fixation des ailes (5, 6, 7, 8) entre elles, au fuselage (2) et, éventuellement, audit élément de voilure (37, 38) est réalisée de manière articulée en rotation dans un plan vertical transversal à la direction de l'écoulement aérodynamique.

2. Aéronef selon la revendication 1 caractérisé en ce que les valeurs maximales du moment d'inertie et de la portance correspondent chacune à une zone de l'aile située sensiblement au centre de l'aile considérée dans le sens longitudinal.

3. Aéronef selon la revendication 1 ou la revendication 2, caractérisé en ce que chaque structure de sustentation (3, 4) comporte des moyens de haubanage (15, 16, 17, 18).

4. Aéronef selon la revendication 3, caractérisé en ce que les moyens de haubanage sont constitués de câbles métalliques (15, 16, 17, 18).

5. Aéronef selon la revendication 3, caractérisé en ce que les moyens de haubanage sont constitués d'éléments de voilure (43, 44, 45, 46) jouant le rôle de plans porteurs.

6. Aéronef selon la revendication 5, caractérisé en ce que les éléments de voilure (43, 44, 45, 46) formant haubans présentent une structure telle que les valeurs du moment d'inertie et de la portance variant en fonction de la distance longitudinale soient maximales en un endroit de l'élément de voilure correspondant à son milieu dans le sens longitudinal.

7. Aéronef selon l'une quelconque des revendications 3 à 6, caractérisé en ce que, dans chaque structure, l'une au moins des ailes ou l'un au moins des haubans, est solidarisé sur le fuselage par l'intermédiaire de moyens de suspension élastique, autorisant un mouvement relatif limité de l'aile ou du hauban correspondant par rapport au fuselage.

## Claims

1. Aircraft, of the type comprising on either side of its fuselage (2) at least one lift structure (3, 4) constituted by at least two wings (5, 6 ; 7, 8) whose distal ends are connected either to each other or to at least one wing element (37, 38) provided between them, each structure forming in front elevation with the sides of the fuselage a closed polygon, and comprising an upper wing and a lower wing, the zones of attachment of the upper and lower wings possibly being offset in the direction of the streamline flow, characterized in that said wings (5, 6, 7, 8) are hinged to each other, on the fuselage (2) and possibly on said wing element (37, 38) so as to rotate in a vertical plane transverse with respect to the direction of the streamline flow.

2. Aircraft according to claim 1, characterized in that the maximum values of the moment of inertia and of the lift each correspond to a zone of the wing located substantially at the centre of the wing considered in the longitudinal direction.

3. Aircraft according to claim 1 or claim 2, characterized in that each lift structure (3, 4) comprices bracing means (15, 16, 17, 18).

4. Aircraft according to claim 3, characterized in that the bracing means are constituted by metal cables (15, 16, 17, 18).

5. Aircraft according to claim 3, characterized in that the bracing means are constituted by wing elements (43, 44, 45, 46) performing the role of carrier planes.

6. Aircraft according to claim 5, characterized in that the wing elements (43, 44, 45, 46) forming braces are of such structure that the values of the moment of inertia and of the lift varying as a function of the longitudinal distance, are maximum at a zone of the wing element corresponding to its centre in the longitudinal direction.

7. Aircraft according to anyone of claims 3 to 6, characterized in that in each structure, at least one of the wings, or at least one of the braces, is connected to the fuselage via elastic suspension means, allowing a limited relative movement of the corresponding wing or brace with respect to the fuselage.

**Patentansprüche**

1. Luftfahrzeug bestehend beiderseits vom Rumpf (2) aus zumindest einem Auftriebsaufbau (3, 4) aus zumindest zwei Flügeln (5, 6 ; 7, 8), dessen Fernenden entweder miteinander oder zumindest mit einem zwischen ihnen vorgesehenen Tragwerkteil (37, 38) verbunden sind, wobei von vorne gesehen jeder Aufbau mit den Seiten des Rumpfes ein geschlossenes Vieleck bildet und einen oberen und einen unteren Flügel aufweist, deren Anschlußzonen nach der aerodynamischen Strömungsrichtung gegebenenfalls versetzt sind, dadurch gekennzeichnet, daß die Befestigung der Flügel untereinander mit dem Rumpf (2) und gegebenenfalls mit dem Tragwerkteil (37, 38) so durchgeführt ist, daß sie in einer quer zur aerodynamischen Strömungsrichtung verlaufenden senkrechten Ebene drehbar angelenkt ist.

2. Luftfahrzeug nach Anspruch 1, dadurch gekennzeichnet, daß die Maximalwerte des Trägheits- und Auftriebsmoments jeweils einer allgemein in von der Längsrichtung gesehen in Flügelmitte liegenden Flügelzone entsprechen.

3. Luftfahrzeug nach einem der vorhergehenden Ansprüche 1 oder 2, dadurch gekennzeichnet, daß jeder Auftriebsaufbau (3, 4) Verspannungen (15, 16, 17, 18) aufweist.

4. Luftfahrzeug nach Anspruch 3, dadurch gekennzeichnet, daß Metallkabel (15, 16, 17, 18) als Verspannungen verwendet werden.

5. Luftfahrzeug nach Anspruch 3, dadurch gekennzeichnet, daß als Verspannungen als Tragflächen wirkende Tragwerkteile (43, 44, 45, 46) verwendet werden.

6. Luftfahrzeug nach Anspruch 5, dadurch gekennzeichnet, daß die die Verspannung bildenden Tragwerkteile (43, 44, 45, 46) einen Aufbau haben, der so beschaffen ist, daß die Werte des Trägheits- und Auftriebsmoments, die in Abhängigkeit vom Längsabstand variieren, an einem in Längsrichtung der Mitte entsprechenden Ort auf dem Tragwerkteil Maximalwerte darstellen.

7. Luftfahrzeug nach einem der vorhergehenden Ansprüche 3 bis 6, dadurch gekennzeichnet, daß in jedem Aufbau zumindest einer der Flügel oder zumindest einer der Verspannungen mit Hilfe von elastischen Aufhängungen am Rumpf befestigt ist, wodurch gegenüber dem Rumpf eine begrenzte Relativbewegung des entsprechenden Flügels oder der entsprechenden Verspannung gewährleistet ist.

0 088 696

*Fig:1*

*Fig:2*

*Fig:3*

1

0 088 696

Fig. 4

Fig. 5

Fig. 6

Fig. 7

Fig. 8

Fig. 9

Fig. 10

Fig. 11

Fig.12

Fig.13